# EUROPEAN PATENT SPECIFICATION

(11) **EP 4 592 602 B1**
(45) Date of publication and mention of the grant of the patent: **09.09.2026**
(21) Application number: 24218951.2
(22) Date of filing: 11.12.2024
(51) Int. Cl.: F24H 15/429, F24H 15/32, F24D 19/00, F24H 9/00, F24H 1/52, F24D 19/10

(54) **FILTER FOR THE INTERCEPTION OF SOLID COMPOUNDS CIRCULATING IN A HEATING SYSTEM, AND HEAT GENERATOR WITH FILTER**
FILTER ZUM AUFFANGEN VON IN EINEM HEIZSYSTEM ZIRKULIERENDEN FESTEN VERBINDUNGEN UND WAERMEERZEUGER MIT FILTER
FILTRE POUR L'INTERCEPTION DE COMPOSÉS SOLIDES CIRCULANT DANS UN SYSTÈME DE CHAUFFAGE ET GÉNÉRATEUR DE CHALEUR AVEC FILTRE

(30) Priority: 25.01.2024 IT 202400001365
(43) Date of publication of application: 30.07.2025
(73) Proprietor: Ariston S.p.A., 60044 Fabriano (AN) (IT)
(72) Inventor: CENTURELLI, Lorenzo, 60027 Osimo (AN) (IT); PIZZICHINI, Massimo, 60027 Osimo (AN) (IT); ZAMPETTI, Alessandro, 60035 Jesi (AN) (IT)
(74) Representative: Mar.Bre S.r.l.

(56) References cited:
- EP-B1- 1 650 506
- WO-A1-2018/138061
- CN-U- 218 871 473
- DE-A1- 102020 132 266
- US-A1- 2021 052 995

## Description

The object of the present invention is a filter for the interception and retention of solid compounds circulating in heating systems or the like.

More in detail, the present invention refers to a mesh filter for the interception and the retention of solid compounds circulating in closed circuit heating systems or the like.

More in detail, the present invention refers to a mesh filter adapted to protect and safeguard the components equipped with reduced passage sections of a generic heat generator.

As is known, in the heating systems, particularly in the closed circuit ones, solid compounds may form because of corrosion and precipitation phenomena of the substances dissolved in the heat transfer fluid, generally water or aqueous solutions. It is known from EP 1 650 506 B1 that a dual-function gas boiler may comprise a compact hydraulic unit with a cylindrical filter arranged in a straight duct between the primary exchanger and the heating circuit in order to protect a secondary plate heat exchanger. CN 218871473 U discloses a wall-hung boiler with a built-in cylindrical filter and a drain valve for flushing out impurities from the filter housing.

Such solid compounds, once detached and dragged by the heat transfer fluid flow, may cause problems for some components present inside the heat generators or in the same heating system.

Generally, the components that are most affected and suffer from the presence of these solid compounds are those equipped with reduced/small passage sections, such as, for example, circulators, flow rate meters and/or heat exchangers, in particular exchangers with braze-welded plate technology.

In fact, said solid compounds, once detached from the heat transfer fluid, circulate in the heating system and tend to settle in proximity of or to obstruct the sections with smaller diameters, consequently reducing the passage section thereof.

Currently, among the most widely used solutions for the safeguard of such components, there are filters, in particular mesh filters.

Such mesh filters, even if they are effective in intercepting the solid compounds, preventing them from reaching and obstructing the passage sections of the aforementioned components, still have some drawbacks.

In fact, over time, the quantity of solid compounds blocked by the filter increases, creating an accumulation that, eventually, causes a clogging/obstruction of the same filter.

To restore the functionality of the filter and ensure the correct circulation of the heat transfer fluid, it is necessary to remove such accumulation by cleaning or replacing the filter.

This requires that the filter is made inspectable and reachable by an operator, while the filter cleaning or replacement operation normally requires emptying the closed circuit of the heating system, cleaning/replacing the filter, refilling the closed circuit and subsequent deaeration.

Deaeration is necessary to eliminate possible air entered in the closed circuit during the emptying/filling step, in order to ensure the correct operation of the system and preserve the reliability of the components, avoiding possible micro-boiling and/or localised overheating phenomena.

It is therefore clear that the maintenance for cleaning or replacing the filter is quite laborious, requiring emptying/filling the system circuit and consequent increase in costs and intervention times.

The object of the present invention is to obviate such kind of drawbacks, by providing for an improved mesh filter for the interception and retention of solid compounds circulating in heating systems able to protect and safeguard the components of said heating systems from the accumulation of solid compounds, in particular of components equipped with reduced passage sections.

A further object of the present invention, at least for one or more executive variants, is to provide a mesh filter for the interception and retention of solid compounds circulating in heating systems, able to reduce the times and complexity of the cleaning operation of the same mesh filter.

A further object of the present invention, at least for one or more executive variants, is to provide a mesh filter for the interception and retention of solid compounds circulating in heating systems, the cleaning whereof does not require the operation of emptying and subsequent filling the system circuit.

A further object of the present invention, at least for one or more executive variants, is to provide a mesh filter for the interception and retention of solid compounds circulating in heating systems which is simple to produce and easy to install.

A further object of the present invention is to provide a heating system able to facilitate the cleaning of said mesh filter, avoiding the operation of emptying and subsequent filling the system circuit.

A further object of the present invention is to provide a heat generator able to protect and safeguard, through the adoption of said mesh filter, the components from the accumulation of solid compounds, in particular, the components equipped with reduced passage sections.

This and other objects, which shall appear clear hereinafter, are achieved with a mesh filter according to the independent claims.

Other objects may also be achieved by means of the additional features of the dependent claims.

Further features of the present invention shall be better highlighted by the following description of a preferred embodiment, according to the patent claims and illustrated, purely by way of a non-limiting example, in the accompanying drawing tables, wherein:
- Figure 1 shows a schematic view of a possible heat generator of a generic heating system provided with the mesh filter according to the present invention;

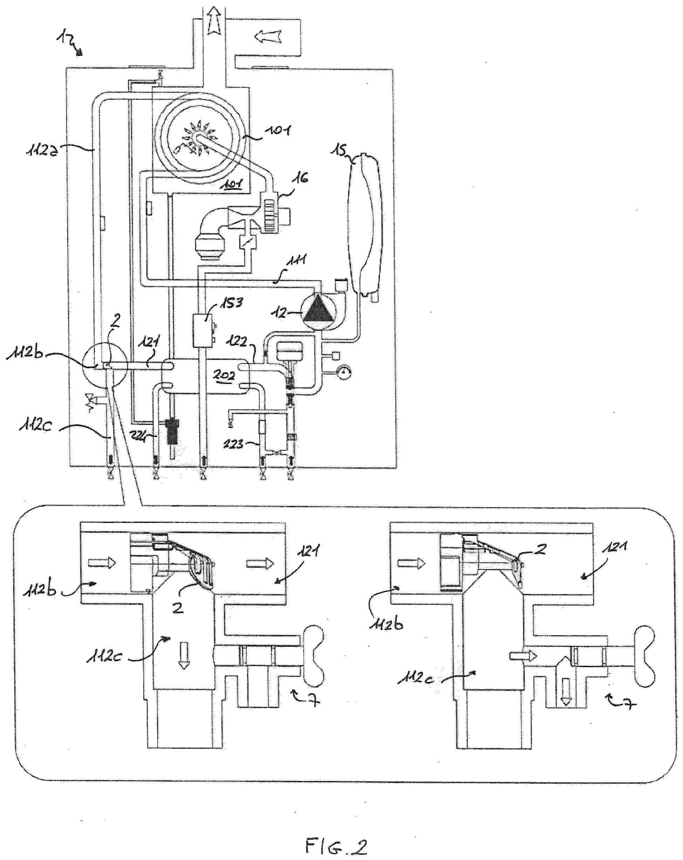

- Figure 2 shows a detailed view of Figure 1;
- Figure 3a shows a detailed view of the mesh filter of Figure 2 during the operation in DHW (Domestic Hot Water) mode;
- Figure 3b shows a detailed view of the mesh filter of Figure 2 during the operation in CH (Central Heating) mode;
- Figure 4 shows a detailed view of the mesh filter of Figure 2 during the operation in exhaust/de-aerating mode;
- Figure 5 shows a perspective view of a possible executive variant of the mesh filter according to the present invention;
- Figure 6 shows a perspective view of the mesh filter of Figure 5;
- Figure 7 shows a side view of the mesh filter of Figure 5;
- Figure 8 shows a top view of the mesh filter of Figure 5;
- Figure 9 shows a rear view of the mesh filter of Figure 5;
- Figure 10 shows a section view of the mesh filter of Figure 9.

The features of the deaerator according to the present invention are now described using the references contained in the figures.

It should be noted that any dimensional and spatial term (such as "lower", "upper", "inner", "outer", "front", "rear", "vertical", "horizontal" and the like) possibly used below refers, unless otherwise indicated, to the position according to which the object of the invention shown in the drawings is arranged in operating conditions.

Hereinafter, the term mesh filter is to be understood as a device able to intercept and retain the solid compounds carried by the heat transfer fluid along a heating system.

Without any limiting intent, "solid compounds" are to be understood as all of those foreign bodies that circulate with the heat transfer fluid, such as for example rust and/or limestone aggregates or the like.

The mesh filter according to the present invention may be installed on different heating systems, preferably of the closed circuit type, comprising at least one generic heat generator such as, for example, gas and condensing boilers or the like.

Without any limiting intent, reference shall be made hereinafter to a closed circuit heating system provided with at least one heat generator, substantially a gas boiler or the like, equipped with the essential components for the operation thereof, excluding all those components and/or accessories that may be installed along a heating system or on a heat generator, which do not constitute the object of the present description.

Reference numeral 1 indicates, as a whole, a generic heat generator 1 that may be installed in a generic heating system.

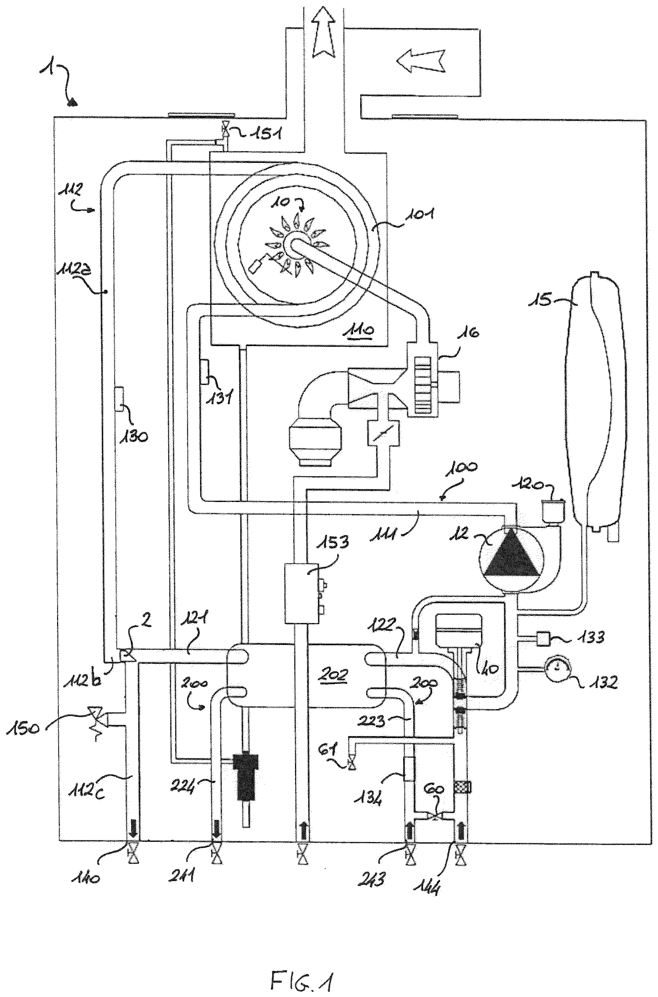

As shown in figure 1, said heat generator may comprise a gas boiler, in particular a condensing gas boiler, wherein the components necessary for the operation thereof, well known to the man skilled in the art, are housed; only those components strictly relevant to the object of the invention shall be mentioned herein.

The heat generator 1, hereinafter referred to as boiler 1, comprises:
- at least one primary circuit 100 and at least one secondary circuit 200, both intended to heat the water through at least one corresponding heat exchanger, namely a primary heat exchanger 101, hereinafter "primary exchanger 101", for the heat transfer fluid and a secondary heat exchanger 202, hereinafter "secondary exchanger 202", for the domestic hot water; and
- at least one burner 10, located in a combustion chamber 110 housing at least also said primary exchanger 101.

Said boiler 1 may further comprise at least one circulation pump 12 capable of circulating the heat transfer fluid, a possible expansion vessel 15, forced ventilation means 16 capable of modulating the combustion air to the burner 10, at least one gas valve 153 adapted to regulate the flow rate of the fuel gas that supplies said burner 10.

Said primary circuit 100 may comprise:
- at least said one primary exchanger 101 which, in the example of the preferred variant in the figure, is made up of a helical coil exchanger;
- a supply duct 112 of the heat transfer fluid that starts from said primary exchanger 101 to be sent to the heating bodies (not shown) of the heating system via the outlet 140;
- a return duct 111 that, through the inlet 144, leads the heat transfer fluid coming/returning from the heating bodies of the heating system to the primary exchanger 101, where such fluid may be again heated by said burner 10;
- the circulation pump 12, preferably located on said return duct 11; preferably, as shown in the figures, such pump 12 may comprise a deaerator device 120 to dispose of the air bubbles that form in the heat transfer fluid;
- at least one diverter valve 40, preferably of the motorised three-way type, to switch the operating modes of the boiler 1 described shortly;
- possible filling tap 60, emptying tap 61, safety valve 62, all preferably according to the prior art.

The primary circuit 100 further comprises also an inlet duct 121, derived from the supply duct 112, adapted to make the heat transfer fluid flowing towards the secondary exchanger 202 and wherefrom it then exits by means of at least one outlet duct 122 and reaches the return duct 111 of said primary circuit 100.

The secondary circuit 200 may comprise:
- at least said one secondary exchanger 202, preferably of the plate type;
- at least one delivery duct 224 which, through an outlet 241, sends domestic hot water to the user;
- at least one supply duct 223 of the cold water entering the secondary exchanger 202 through the inlet 243, said cold water being heated, by the heat transfer fluid passing through the secondary exchanger 202, to produce domestic hot water to be sent to the user through said delivery duct 224.

The boiler 1 is capable of operating according to at least two possible operating modes:
- a CH (Central Heating) mode, in which the heat transfer fluid, heated in the primary exchanger 101, is used for the room heating via the heating elements of the heating system;
- a DHW (Domestic Hot Water) mode, in which the heat transfer fluid, heated in the primary exchanger 101, is sent to the secondary exchanger 202 so as to heat and produce domestic hot water.

When the heat transfer fluid follows the CH mode path, it passes through the primary exchanger 101, the supply duct 112 to reach the heating system and, on its return from the system, the return duct 111.

When the heat transfer fluid, instead of following the CH mode path, is diverted to pass through the secondary exchanger 202 via the aforementioned inlet 121 and outlet 122 ducts, the boiler 1 operates in DHW mode.

The switching of the diverter valve 40 determines the operation of the boiler 1 in DHW or CH mode, where:
- in DHW mode, the valve 40 diverts the flow of the primary circuit 100 towards the secondary exchanger 202 via the inlet duct 121;
- in CH mode, the valve 40 diverts the flow of the primary circuit 100 towards the heating bodies of the heating system via the outlet 140.

In both cases, obviously, the thermal power delivered depends on the thermal power required.

Said diverter valve 40 is preferably arranged along the outlet duct 122.

The boiler 1 also comprises at least one control unit capable of managing at least the burner 10 and said diverter valve 40 so as to implement the CH or DHW mode.

The boiler 1 may be further equipped with at least one air vent valve 151. Furthermore, the boiler 1 may be equipped with a plurality of different sensors such as, for example:
- at least one temperature sensor 130 of the delivery of the heat transfer fluid; and/or
- at least one temperature sensor 131 of the return of the heat transfer fluid; and/or
- at least one pressure gauge 132; and/or
- at least one sensor 133 adapted to detect the pressure of the heat transfer fluid; and/or
- a flow meter 134 adapted to detect the flow rate/quantity of domestic water requested by the user.

As already partially anticipated, the components and operation of the heating system or heat generator 1 shall not be further described and detailed, being them notions known to the man skilled in the art.

According to the invention, the heat generator 1 is characterised in that it is equipped with the mesh filter 2 according to the present invention.

The mesh filter 2 according to the present invention may be installed/positioned in a generic heat generator, such as for example the boiler 1, and is characterised in that it may be hit by the heat transfer fluid both in CH mode and in DHW mode.

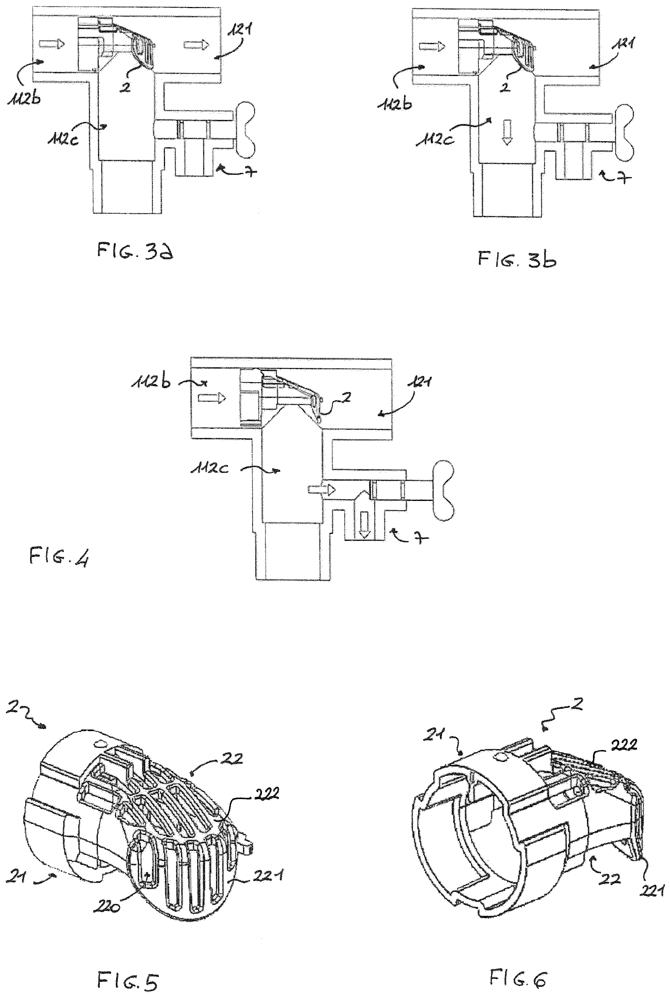

In general, the mesh filter 2 according to the present invention is advantageously positioned and shaped so as to:
- prevent, in DHW mode, the passage of solid compounds, via the inlet duct 121, towards the secondary exchanger 202, Figure 3a;
- be cleaned, by means of the flow of the heat transfer fluid in CH mode, from the possible accumulation of the solid compounds intercepted and retained by it, said compounds being then removed and carried by the heat transfer fluid towards the heating system where they may settle without creating problems for the components of the boiler 1, Figure 3b.

In essence, in DHW mode, the mesh filter 2 prevents the solid compounds from crossing the inlet duct 121 and reaching the secondary exchanger 202, safeguarding the functionality and longevity thereof, while in CH mode the heat transfer fluid, lapping the surfaces of the mesh filter 2, acts/insists on the solid compounds deposited on the same filter 2, moving and carrying them elsewhere, freeing/cleaning the mesh filter 2.

Therefore, it may be seen that according to the invention it is sufficient to switch the boiler 1 to CH mode and activate the pump 12 in order to clean the mesh filter 2.

The cleaning of the filter 2, therefore, is carried out at each switching of the boiler 1 from the DHW to CH mode, said switching:
- depending on the normal operation of the boiler 1, which should operate to accomplish the room heating and the request for domestic hot water, such as for example during the winter period; or
- be requested via a possible control mode described shortly.

The heating system according to the present invention is characterised in that it comprises a heat generator equipped with said mesh filter 2, said mesh filter 2 being positioned in the heat generator 1 so that it may be hit by the heat transfer fluid both in CH mode and in DHW mode and the cleaning whereof requires switching the boiler 1 to CH mode.

For such purpose, the mesh filter 2 may be installed in proximity of a bifurcation or of a connection, preferably of the "T" type or the like, present or appropriately obtained/defined in the heat generator 1, preferably positioned along the section of the supply duct 112 located upstream of the inlet duct 121.

Preferably, with reference to the boiler 1 shown by way of an example in the accompanying figures, said mesh filter 2 may be installed along the supply duct 112, at the point where said duct 112 is inserted/connected to said inlet duct 121. For such purpose, the supply duct 112 may be shaped so as to have an elbow/bend whereon a T-fitting or the like may be inserted or defined.

In accordance with a possible executive variant, said supply duct 112 comprises at least:
- a first section 112a that extends from the primary exchanger 101, to which it is appropriately connected, to a second section 112b; and
- said second section 112b substantially arranged:
   - orthogonal between said first section 112a and a third section 112c, and
   - coplanar to the inlet duct 121 to which it is appropriately connected, said second section 112b being capable of housing, at least partially, said mesh filter 2; and
- said third section 112c that extends from said second section 112b up to said outlet 140.

In essence, said first 112a and third section 112c may be arranged substantially vertical, while said second section 112b may be positioned substantially horizontal.

Through such possible conformation of the supply duct 112, it is possible to position the mesh filter 2 in proximity to a "T" or the like so that it may be hit by the heat transfer fluid both in CH mode and in DHW mode.

The mesh filter 2 may be fixed to the inner walls of the bifurcation or of the connection or of the second section 112b via, for example, shape couplings, joints, by interference or the like or through the use of glues or the like.

In general, said mesh filter 2 is appropriately shaped so as to be housed in said bifurcation or connection or second section 112b and so as to enable the heat transfer fluid to be sent towards:
- the inlet duct 121 when the boiler 1 operates in DHW mode, said fluid being filtered by the mesh filter 2 before reaching the secondary exchanger 202, Figure 3a;
- the third section 112c, when the boiler 1 operates in CH mode, said fluid lapping and cleaning the mesh filter 2, Figure 3b.

In accordance with a preferred variant, the boiler 1 may provide for a control mode, preferably managed and implemented by the control unit, capable of carrying out/commanding a voluntary switching to CH mode after long periods of operation of the boiler 1 in DHW mode, with the aim of cleaning the mesh filter 2 with a certain regularity so as to keep high its filtering power and/or avoid blockages/obstructions thereof.

Said control mode, via the control unit, provides for keeping track/memory of the switchings of the diverter valve 40 so as to be able to monitor how much time elapsed since the last switching and therefore be able to determine how long the boiler 1 has been working for in DHW or CH mode.

In such way, during the control mode, it is possible to determine in which mode the boiler 1 is operating and for how long and, if it has been operating in DHW mode for a time period longer than a preset reference period, implement the voluntary switching to CH mode.

The control mode may be performed autonomously by the boiler 1 at regular intervals set by the manufacturer and/or installer and/or user or upon request, for example via the control panel.

Said reference period may be set, and possibly modified, by the manufacturer and/or installer and/or user, and may be equal to, for example, one month or multiples or submultiples thereof.

Therefore, if said control mode detects that the reference period has been exceeded in DHW mode, it provides for the voluntary switch to CH mode by switching the diverter valve 40 and activating the pump 12.

The control mode is particularly useful during the summer period, in which the boiler 1 works for a long period essentially only in DHW mode; generally, a long period means at least one month.

It should be noted that such voluntary switching from the DHW to CH mode is carried out in such a way as not to interfere with the normal operation of the boiler 1, for example, it is not implemented during the delivery of domestic hot water.

During the winter period, where the boiler 1 frequently operates in CH mode switching from one mode to another, the cleaning of the filter 2 is carried out regularly at each switching from DHW to CH.

However, nothing prevents said control mode, which may be possibly suspended during the winter period, from being always active so as to ensure the cleaning of the filter 2 even during the winter period, if boiler 1 does not frequently operate in CH mode.

In accordance with a possible executive variant, reported as a non-limiting example in the accompanying figures, said heat generator 1 may be further provided with an exhaust/de-aerating system 7.

Said exhaust system 7 may comprise a purge valve, preferably of the manual type, or a tap or the like.

In general, said purge valve 7 allows for carrying out and accelerating the air purge step during the step of filling the circuit of the heating system or during a maintenance operation of the generator 1.

In accordance with a preferred variant, said purge valve 7 may be positioned along the supply duct 112, preferably along the third section 112c downstream of the mesh filter 2.

In such case, said purge valve 7 may also be advantageously used to implement the cleaning of the mesh filter 2, preferably with pump 12 not in operation, without the need for the boiler 1 to necessarily switch to CH mode.

In fact, in case of manual or electrical opening, of said purge valve 7, a flow of heat transfer fluid is generated that laps and passes through the mesh filter 2, removing the solid compounds that may have deposited, and which flows out of the same purge valve 7, Figure 4.

This flow of the heat transfer fluid is substantially generated by the difference in pressure between the closed circuit of the heating system and the atmospheric pressure present at the outlet of the purge valve 7, and tends to remove the solid compounds accumulated and to discharge them into the condensate and overpressure exhaust channellings already present/provided for in the boilers.

It should be noted that such use of the valve 7 for cleaning the filter 2 may be provided for in addition to or as an alternative to the cleaning carried out in CH mode.

In accordance with a possible executive variant, reported by way of a non-limiting example in figures 5 to 10, said mesh filter 2 may comprise a hollow body provided with:
- a first portion 21 of a substantially hollow cylindrical shape, capable of:
   - being housed, preferably with interference or interlocking, in a bifurcation or in a connection of the boiler 1 or in the second section 112b of the supply duct 112, and
   - acting as a support for a second portion 22; and
- said one second portion 22 which is protruding from said first portion 21 and equipped with a plurality of openings 220 for the passage of the heat transfer fluid, said second portion 22 substantially defining the filtering section of the mesh filter 2, and being lapped, substantially tangentially, in CH mode by the heat transfer fluid.

When the heat transfer fluid reaches the mesh filter 2, it passes through the first portion 21, reaches the second portion 22 and, depending on the mode in which the boiler 1 operates, it heads either towards the third section 112c, lapping said second portion 22, or to the inlet duct 121, passing through said second portion 22.

The different portions 21 and 22 of the mesh filter 2 have such dimensions that, once the mesh filter 2 is installed in said bifurcation or connection or second section 112b:
- said first portion 21 guarantees a stable coupling with said bifurcation or connection or second section 112b, ensuring the position/stationarity of the filter 2;
- said second portion 22 substantially extends up to the engagement of the inlet duct 121 and has a transverse development similar to that of the passage section of said inlet duct 121 so as to filter the entire flow that enters therein.

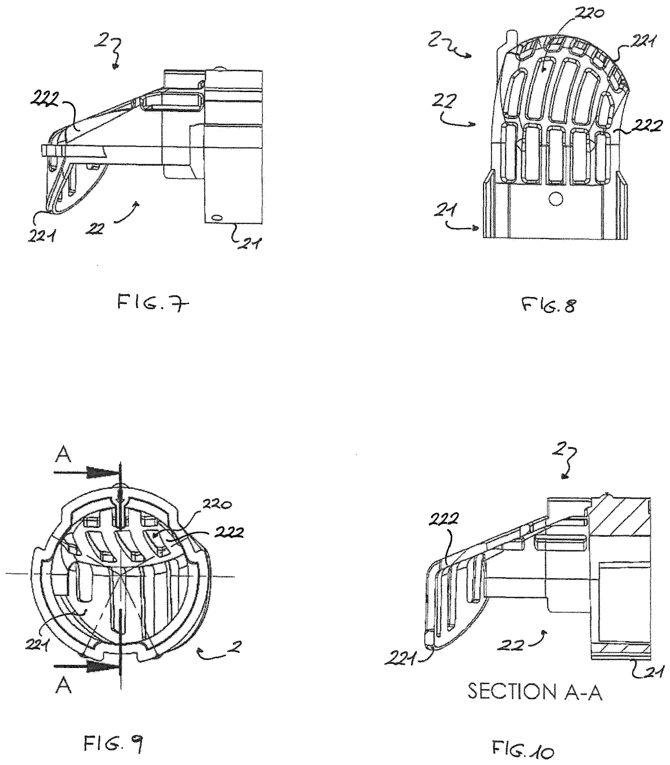

In accordance with a possible executive variant, reported by way of a non-limiting example in the accompanying figures, said second portion 22 provides for a sloping/inclined longitudinal development that degrades when moving away from the end thereof integral to said first portion 21, towards the free/protruding end thereof 221 (Figure 10).

Such sloping development of the second portion 22 facilitates the removal of the solid compounds by the heat transfer fluid that laps it, substantially tangentially, in CH mode.

In fact, the sloping development diverts/guides the flow so as to oblige/force it to entirely lap said second portion 22, improving the interaction with the retained solid compounds and therefore the removal thereof.

In accordance with a preferred variant, said second portion 22 may be shaped substantially in the form of an "L" and provide for:
- a first section 222 integral with said first portion 21 of the filter 2 and adapted to act as a support for a second section 221;
- said second section 221 which is protruding, substantially orthogonally, from said first section 222 so as to define said free end 221;
said first 222 and second 221 section being both advantageously provided with said openings 220.

Preferably, said first section 222 defines the sloping/inclined part of said second portion 22.

In accordance with a possible executive variant, reported by way of a non-limiting example in the accompanying figures, said mesh filter 2, in particular the free end 221 of the second portion 22, may have a curved profile.

Preferably, said free end 221 may have an outward curvature, that is, once the filter 2 is installed in said bifurcation or connection or second section 112b, said free end 221 is curved/convexed towards the inlet duct 121.

Even more preferably, said free end 221 has a horizontal curvature, that is, the radius of curvature thereof is parallel to the longitudinal axis of symmetry of the mesh filter 2.

Such curved profile facilitates the removal of the solid compounds during the cleaning operation of the mesh filter 2.

According to different embodiments, the mesh filter 2 may be made of different materials, preferably of the type resistant to corrosion/rust or to the action of the heat transfer fluid, such as for example metallic or plastic materials.

Similarly, the mesh filter 2 may be an assembly/union of different components or made as a single piece, for example by moulding.

The mesh filter 2 according to the present invention is capable of intercepting and retaining the solid compounds circulating in a generic heating system, such as for example the heating system described above, in order to protect and safeguard the components from the accumulation of the same solid compounds, in particular the components equipped with reduced passage sections.

The mesh filter 2 according to the present invention allows for easier and faster cleaning operation, not requiring emptying and subsequent filling and deaeration of the circuit of the system.

Finally, it should be noted how easily and quickly said mesh filter 2 may be installed on a heat generator and coupled with bifurcations, connections or the second section 112b.

The installation of the mesh filter 2, in fact, requires the insertion and coupling with said bifurcations, connections or the second section 112b in accordance with what illustrated above.

It is clear that several variants of the invention described above are possible for the man skilled in the art, without departing from the novelty scopes of the inventive idea, as well as it is clear that in the practical embodiment of the invention the various components described above may be replaced with technically equivalent ones.

For example, the mesh filter 2, in particular the portions thereof 21 and 22, may be modified and shaped so as to be able to be installed and cooperate better with different types of bifurcations or connections or different configurations of the supply duct 112 so as to be able to be installed on different types of heat generators.

Said duct 112, in fact, may be without the second section 112b and therefore straight; in such case the filter 2 may be appropriately shaped so as to be able to be installed preferably in the inlet duct 121 and guarantee the filtering properties and cleaning modes described above.

## Claims

1. Heat generator (1) that may be installed in a generic heating system, said heat generator (1) comprising:
- at least one primary circuit (100) provided with at least one primary exchanger (101), at least one supply duct (112) of the heat transfer fluid, at least one return duct (111) and at least one inlet duct (121), derived from said supply duct (112), adapted to make the heat transfer fluid flow towards a secondary exchanger (202) wherefrom it exits via at least one outlet duct (122) and reaches said return duct (111),
- at least one secondary circuit (200) provided with at least one secondary exchanger (202), at least one delivery duct (224), at least one supply duct (223) of the cold water entering the said secondary exchanger (202), said cold water being heated, by the heat transfer fluid that passes through said secondary exchanger (202), to produce domestic hot water to be sent to the user through said delivery duct (224),
- at least one burner (10),
- at least one control unit,
- at least one circulation pump (12) capable of circulating a heat transfer fluid,
- at least one diverter valve (40) to switch the operating modes of said heat generator (1),
said heat generator (1) being capable of operating according to at least two possible operating modes:
- a CH mode, in which said heat transfer fluid, heated in said primary exchanger (101), is used for room heating;
- a DHW mode, in which said heat transfer fluid, heated in said primary exchanger (101), is sent to said secondary exchanger (202) so as to heat and produce domestic hot water;
whereby it is equipped with a mesh filter (2) capable of intercepting and retaining the solid compounds carried by said heat transfer fluid along said heating system, said mesh filter (2) being positioned along said heat generator (1) so as to be able to be hit by said heat transfer fluid both in CH mode and in DHW mode,
said mesh filter (2) being positioned and shaped so as to:
- prevent, in DHW mode, the passage of solid compounds towards said secondary exchanger (202);
- be cleaned, through the flow of the heat transfer fluid in CH mode, from any accumulation of the solid compounds intercepted and retained by it,
**and characterized in that**
said mesh filter (2) comprises a body provided with:
- a first portion (21) of a substantially hollow cylindrical shape, capable of:
- being housed in a bifurcation or in a connection of the said heat generator (1), and
- acting as a support for a second portion (22); and
- said one second portion (22) protruding from said first portion (21) and equipped with a plurality of openings (220) for the passage of the heat transfer fluid, said second portion (22) defining the filtering section of the said mesh filter (2),
where said second portion (22) provides for a sloping/inclined longitudinal development that degrades, when moving away from the end thereof integral to said first portion (21), towards the free end (221) thereof.

2. Heat generator (1) according to the previous claim, in which said mesh filter (2) is installed along said supply duct (112) at the point in which said inlet duct (121) is inserted/connected to said supply duct (112).

3. Heat generator (1) according to the previous claim, in which said supply duct (112) is shaped so as to have an elbow/bend whereon a "T" connection may be engaged or defined.

4. Heat generator (1) according to the previous claim, in which said supply duct (112) comprises at least:
- a first segment (112a) that extends from said primary exchanger (101), to which it is connected, to a second segment (112b);
- said second segment (112b) arranged substantially orthogonal between said first segment (112a) and a third segment (112c) and substantially coplanar to said inlet duct (121), said second segment (112b) being capable of housing, at least partially, said mesh filter (2);
- said third segment (112c) that extends from said second segment (112b) up to an outlet (140).

5. Heat generator (1) according to the previous claim, in which said mesh filter (2) is fixed to the inner walls of said bifurcation or connection or second segment (112b) via shape couplings, joints, by interference or the use of glues.

6. Heat generator (1) according to any previous claim, in which said heat generator (1) provides for a control mode capable of carrying out/commanding a voluntary switching to CH mode after long periods of operation of the same heat generator (1) in DHW mode, in order to clean said mesh filter (2).

7. Heat generator (1) according to any previous claim, in which said heat generator (1) is further provided with an exhaust/de-aerating system (7) comprising a purge valve positioned along said supply duct (112), said purge valve (7) being able to be used also to implement the cleaning of said mesh filter (2).

8. Heat generator (1) according to any previous claim, in which the free end (221) of said second portion (22) of said mesh filter (2) has a curved profile.

9. Mesh filter (2) capable of intercepting and retaining the solid compounds carried by a heat transfer fluid along a heating system provided with at least one heat generator comprising at least one burner, at least one primary circuit provided with at least one primary exchanger, at least one secondary circuit provided with at least one secondary exchanger,
**characterised in that**
said mesh filter (2) comprises a body provided with:
- a first portion (21) of a substantially hollow cylindrical shape, capable of:
- being housed in a bifurcation or in a connection of the said heat generator, and
- acting as a support for a second portion (22); and
- said one second portion (22) protruding from said first portion (21) and equipped with a plurality of openings (220) for the passage of the heat transfer fluid, said second portion (22) defining the filtering section of the said mesh filter (2),
**and in that**
said second portion (22) provides for a sloping/inclined longitudinal development that degrades when moving away from the end thereof integral to said first portion (21), towards the free end (221) thereof.

10. Mesh filter (2) according to the previous claim, in which the free end (221) of said second portion (22) has a curved profile.

11. Control mode of a heat generator (1) according to the previous claims 1 to 8, said control mode being capable of carrying out/commanding a voluntary switching to CH mode of said heat generator (1), said control mode providing for:
- keeping track/memory of the switchings of said diverter valve (40);
- determining in which mode and for how long said heat generator (1) is operating;
- implementing the voluntary transition to CH mode if said heat generator (1) is operating in DHW mode for a time period longer than a preset reference period.

12. Control mode according to the previous claim, in which said control mode is carried out autonomously by the heat generator (1) at regular intervals set by the manufacturer and/or installer and/or user or on request.

13. Control mode according to the previous claim 11 or 12, in which said reference period may be set by the manufacturer and/or installer and/or user.

## Patentansprüche

1. Wärmeerzeuger (1), der in ein allgemeines Heizsystem installiert werden kann, wobei der Wärmeerzeuger (1) umfasst:
- mindestens einen Primärkreislauf (100), der mit mindestens einem Primärwärmetauscher (101), mindestens einer Zufuhrleitung (112) der Wärmeträgerflüssigkeit, mindestens einer Rücklaufleitung (111) und mindestens einer Einlassleitung (121) versehen ist, die von der Zufuhrleitung (112) abgeleitet ist, die geeignet ist, die Wärmeträgerflüssigkeit zu einem Sekundärwärmetauscher (202) strömen zu lassen, von wo sie über mindestens eine Auslassleitung (122) austritt und die Rücklaufleitung (111) erreicht,
- mindestens einen Sekundärkreislauf (200), der mit mindestens einem Sekundärwärmetauscher (202), mindestens einer Ausgabeleitung (224), mindestens einer Zufuhrleitung (223) des kalten Wassers, das in den Sekundärwärmetauscher (202) eintritt, versehen ist, wobei das kalte Wasser durch die Wärmeträgerflüssigkeit erhitzt wird, die durch den Sekundärwärmetauscher (202) durchgeht, um Brauchwarmwasser zu erzeugen, das über die Ausgabeleitung (224) zum Verbraucher geleitet wird,
- mindestens einen Brenner (10),
- mindestens eine Steuereinheit,
- mindestens eine Umwälzpumpe (12), die in der Lage ist, eine Wärmeträgerflüssigkeit umzuwälzen,
- mindestens ein Umschaltventil (40), um die Betriebsmodi des Wärmeerzeugers (1) umzuschalten,
wobei der Wärmeerzeuger (1) in der Lage ist, in mindestens zwei möglichen Betriebsmodi zu arbeiten:
- einem CH-Modus, bei dem die Wärmeträgerflüssigkeit, die in dem Primärwärmetauscher (101) erhitzt wird, für die Raumbeheizung verwendet wird;
- einem DHW-Modus, bei dem die Wärmeträgerflüssigkeit, die in dem Primärwärmetauscher (101) erhitzt wird, zum Sekundärwärmetauscher (202) geleitet wird, um Brauchwarmwasser zu erhitzen und zu erzeugen;
**wobei**
er mit einem Siebfilter (2) ausgestattet ist, der in der Lage ist, die festen Verbindungen abzufangen und zurückzuhalten, die von der Wärmeträgerflüssigkeit entlang des Heizsystems mitgeführt werden, wobei der Siebfilter (2) entlang des Wärmeerzeugers (1) positioniert ist, um von der Wärmeträgerflüssigkeit sowohl im CH-Modus als auch im DHW-Modus getroffen werden zu können,
wobei der Siebfilter (2) positioniert und geformt ist, um:
- im DHW-Modus den Durchgang fester Verbindungen zum Sekundärwärmetauscher (202) zu verhindern;
- um durch den Fluss der Wärmeträgerflüssigkeit im CH-Modus von jeglicher Ablagerung der festen Verbindungen, die von ihm abgefangen und zurückgehaltenen werden, gereinigt zu werden,
**und dadurch gekennzeichnet, dass**
der Siebfilter (2) einen Körper umfasst, der versehen ist mit:
- einem ersten Abschnitt (21) von einer im Wesentlichen hohlzylindrischen Form, der in der Lage ist:
- in einer Verzweigung oder einer Verbindung des Wärmeerzeugers (1) untergebracht zu werden und
- als Stütze für einen zweiten Abschnitt (22) zu dienen; und
- wobei der eine zweite Abschnitt (22) aus dem ersten Abschnitt (21) herausragt und mit einer Vielzahl von Öffnungen (220) für den Durchgang der Wärmeträgerflüssigkeit ausgestattet ist, wobei der zweite Abschnitt (22) den Filterbereich des Siebfilters (2) definiert,
wobei der zweite Abschnitt (22) einen schrägen/geneigten Längsverlauf vorsieht, der sich ausgehend von dem seinem Ende, das mit dem ersten Abschnitt (21) einstückig verbunden ist, in Richtung seines freien Endes (221) absenkt.

2. Wärmeerzeuger (1) nach dem vorhergehenden Anspruch, wobei der Siebfilter (2) entlang der Zufuhrleitung (112) an der Stelle installiert ist, an der die Einlassleitung (121) in die Zufuhrleitung (112) eingefügt/mit dieser verbunden ist.

3. Wärmeerzeuger (1) nach dem vorhergehenden Anspruch, wobei die Zufuhrleitung (112) geformt ist, um einen Ellbogen/eine Krümmung aufzuweisen, woran eine "T"-Verbindung in Eingriff gebracht oder definiert werden kann.

4. Wärmeerzeuger (1) nach dem vorhergehenden Anspruch, wobei die Zufuhrleitung (112) mindestens umfasst:
- ein erstes Segment (112a), das sich von dem Primärwärmetauscher (101), mit dem es verbunden ist, bis zu einem zweiten Segment (112b) erstreckt;
- das zweite Segment (112b), das im Wesentlichen orthogonal zwischen dem ersten Segment (112a) und einem dritten Segment (112c) und im Wesentlichen koplanar zur Einlassleitung(121) angeordnet ist, wobei das zweite Segment (112b) in der Lage ist, den Siebfilter (2) mindestens teilweise unterzubringen;
- das dritte Segment (112c), das sich von dem zweiten Segment (112b) bis zu einem Auslass (140) erstreckt.

5. Wärmeerzeuger (1) nach dem vorhergehenden Anspruch, wobei der Siebfilter (2) an den Innenwänden der Verzweigung oder der Verbindung oder des zweiten Segments (112b) mittels Formschlussverbindungen, Steckverbindungen, Presspassung oder unter Verwendung von Klebstoffen befestigt ist.

6. Wärmeerzeuger (1) nach einem der vorhergehenden Ansprüche, wobei der Wärmeerzeuger (1) einen Steuerungsmodus vorsieht, der in der Lage ist, nach langen Betriebszeiten desselben Wärmeerzeugers (1) im DHW-Modus eine willkürliche Umschaltung in den CH-Modus durchzuführen/anzusteuern, um den Siebfilter (2) zu reinigen.

7. Wärmeerzeuger (1) nach einem der vorhergehenden Ansprüche, wobei der Wärmeerzeuger (1) ferner mit einem Abgas-/Entlüftungssystem (7) versehen ist, das ein Ablassventil umfasst, das entlang der Zufuhrleitung (112) positioniert ist, wobei das Ablassventil (7) auch verwendet werden kann, um das Reinigen des Siebfilters (2) durchzuführen.

8. Wärmeerzeuger (1) nach einem der vorhergehenden Ansprüche, wobei das freie Ende (221) des zweiten Abschnitts (22) des Siebfilters (2) ein gekrümmtes Profil aufweist.

9. Siebfilter (2), der in der Lage ist, die festen Verbindungen abzufangen und zurückzuhalten, die von der Wärmeträgerflüssigkeit entlang eines Heizsystems mitgeführt werden, das mit mindestens einem Wärmeerzeuger, der mindestens einen Brenner umfasst, mindestens einem Primärkreislauf, der mit mindestens einem Primärwärmetauscher versehen ist, mindestens einem Sekundärkreislauf versehen ist, der mit mindestens einem Sekundärwärmetauscher versehen ist,
**dadurch gekennzeichnet, dass**
der Siebfilter (2) einen Körper umfasst, der versehen ist mit:
- einem ersten Abschnitt (21) von einer im Wesentlichen hohlzylindrischen Form, der in der Lage ist:
- in einer Verzweigung oder einer Verbindung des Wärmeerzeugers untergebracht zu werden, und
- als Stütze für einen zweiten Abschnitt (22) zu dienen; und
- wobei der zweite Abschnitt (22) aus dem ersten Abschnitt (21) herausragt und mit einer Vielzahl von Öffnungen (220) für den Durchgang der Wärmeträgerflüssigkeit ausgestattet ist, wobei der zweite Abschnitt (22) den Filterbereich des Siebfilters (2) definiert,
**und dadurch, dass**
der zweite Abschnitt (22) einen schrägen/geneigten Längsverlauf vorsieht, der sich ausgehend von seinem Ende, das mit dem ersten Abschnitt (21) einstückig verbunden ist, in Richtung seines freien Endes (221) absenkt.

10. Siebfilter (2) nach dem vorhergehenden Anspruch, wobei das freie Ende (221) des zweiten Abschnitts (22) ein gekrümmtes Profil aufweist.

11. Steuerungsmodus eines Wärmeerzeugers (1) nach den vorhergehenden Ansprüchen 1 bis 8, wobei der Steuerungsmodus in der Lage ist, eine willkürliche Umschaltung des Wärmeerzeugers (1) in den CH-Modus durchzuführen/anzusteuern, wobei der Steuerungsmodus vorsieht:
- das Nachverfolgen/Speichern der Umschaltvorgänge des Umschaltventils (40);
- das Bestimmen, in welchem Modus und wie lange der Wärmeerzeuger (1) in Betrieb ist;
- das Durchführen des freiwilligen Übergangs zum CH-Modus, wenn der Wärmeerzeuger (1) über einen Zeitraum, der länger ist als ein voreingestellter Referenzzeitraum, im DHW-Modus in Betrieb ist.

12. Steuerungsmodus nach dem vorhergehenden Anspruch, wobei der Steuerungsmodus vom Wärmeerzeuger (1) autonom in regelmäßigen Intervallen, die vom Hersteller und/oder Installateur und/oder Verbraucher festgelegt sind, oder auf Anfrage durchgeführt wird.

13. Steuerungsmodus nach dem vorhergehenden Anspruch 11 oder 12, wobei der Referenzzeitraum vom Hersteller und/oder Installateur und/oder Verbraucher festgelegt werden kann.

## Revendications

1. Générateur de chaleur (1) pouvant être installé dans un système de chauffage générique, ledit générateur de chaleur (1) comprenant :
- au moins un circuit primaire (100) muni d'au moins un échangeur primaire (101), d'au moins un conduit d'alimentation (112) du fluide caloporteur, d'au moins un conduit de retour (111) et d'au moins un conduit d'entrée (121), dérivé dudit conduit d'alimentation (112), adapté pour faire circuler le fluide caloporteur vers un échangeur secondaire (202) d'où il sort par au moins un conduit de sortie (122) et atteint ledit conduit de retour (111),
- au moins un circuit secondaire (200) muni d'au moins un échangeur secondaire (202), d'au moins un conduit de distribution (224), d'au moins un conduit d'alimentation (223) de l'eau froide entrant dans ledit échangeur secondaire (202), ladite eau froide étant chauffée, par le fluide caloporteur qui traverse ledit échangeur secondaire (202), pour produire de l'eau chaude sanitaire à envoyer à l'utilisateur par ledit conduit de distribution (224),
- au moins un brûleur (10),
- au moins une unité de contrôle,
- au moins une pompe de circulation (12) capable de faire circuler un fluide caloporteur,
- au moins une vanne de dérivation (40) pour commuter les modes de fonctionnement dudit générateur de chaleur (1),
ledit générateur de chaleur (1) étant capable de fonctionner selon au moins deux modes de fonctionnement possibles :
- un mode CH, dans lequel ledit fluide caloporteur, chauffé dans ledit échangeur primaire (101), est utilisé pour le chauffage de la pièce ;
- un mode DHW, dans lequel ledit fluide caloporteur, chauffé dans ledit échangeur primaire (101), est envoyé audit échangeur secondaire (202) afin de chauffer et de produire de l'eau chaude sanitaire ;
**par lequel**
il est équipé d'un filtre à mailles (2) capable d'intercepter et de retenir les composés solides transportés par ledit fluide caloporteur le long dudit système de chauffage, ledit filtre à mailles (2) étant positionné le long dudit générateur de chaleur (1) de manière à pouvoir être atteint par ledit fluide caloporteur à la fois en mode CH et en mode DHW, ledit filtre à mailles (2) étant positionné et façonné de manière à :
- empêcher, en mode DHW, le passage de composés solides vers ledit échangeur secondaire (202) ;
- être nettoyé, par le flux du fluide caloporteur en mode CH, de toute accumulation de composés solides interceptés et retenus par celui-ci,
**et caractérisé en ce que**
ledit filtre à mailles (2) comprend un corps muni de :
- une première partie (21) de forme cylindrique sensiblement creuse, capable de :
- étant logé dans une bifurcation ou dans une connexion dudit générateur de chaleur (1), et
- servant de support à une seconde partie (22) ; et
- ladite seconde partie (22) faisant saillie de ladite première partie (21) et équipée d'une pluralité d'ouvertures (220) pour le passage du fluide caloporteur, ladite seconde partie (22) définissant la section de filtration dudit filtre à mailles (2),
où ladite deuxième partie (22) prévoit un développement longitudinal en pente qui se dégrade, lorsqu'on s'éloigne de son extrémité faisant partie intégrante de ladite première partie (21), vers l'extrémité libre (221) de celle-ci.

2. Générateur de chaleur (1) selon la revendication précédente, dans lequel ledit filtre à mailles (2) est installé le long dudit conduit d'alimentation (112) au point où ledit conduit d'entrée (121) est inséré/connecté audit conduit d'alimentation (112).

3. Générateur de chaleur (1) selon la revendication précédente, dans lequel ledit conduit d'alimentation (112) est façonné de manière à avoir un coude/courbure sur lequel une connexion en "T" peut être engagée ou définie.

4. Générateur de chaleur (1) selon la revendication précédente, dans lequel ledit conduit d'alimentation (112) comprend au moins :
- un premier segment (112a) qui s'étend de l'échangeur principal (101), auquel il est connecté, à un deuxième segment (112b) ;
- ledit deuxième segment (112b) disposé sensiblement orthogonalement entre ledit premier segment (112a) et un troisième segment (112c) et sensiblement coplanaire audit conduit d'entrée (121), ledit deuxième segment (112b) étant capable d'abriter, au moins partiellement, ledit filtre à mailles (2) ;
- dit troisième segment (112c) qui s'étend du deuxième segment (112b) jusqu'à une sortie (140).

5. Générateur de chaleur (1) selon la revendication précédente, dans lequel ledit filtre à mailles (2) est fixé aux parois intérieures de ladite bifurcation ou connexion ou deuxième segment (112b) via des raccords de forme, des joints, par interférence ou par l'utilisation de colles.

6. Générateur de chaleur (1) selon toute revendication précédente, dans lequel ledit générateur de chaleur (1) prévoit un mode de commande capable d'effectuer/commander une commutation volontaire en mode CH après de longues périodes de fonctionnement du même générateur de chaleur (1) en mode DHW, afin de nettoyer ledit filtre à mailles (2).

7. Générateur de chaleur (1) selon toute revendication précédente, dans lequel ledit générateur de chaleur (1) est en outre doté d'un système d'échappement/désaération (7) comprenant une vanne de purge positionnée le long dudit conduit d'alimentation (112), ladite vanne de purge (7) pouvant également être utilisée pour mettre en œuvre le nettoyage dudit filtre à mailles (2).

8. Générateur de chaleur (1) selon toute revendication précédente, dans lequel l'extrémité libre (221) de ladite deuxième partie (22) dudit filtre à mailles (2) a un profil incurvé.

9. Filtre à mailles (2) capable d'intercepter et de retenir les composés solides transportés par un fluide caloporteur le long d'un système de chauffage doté d'au moins un générateur de chaleur comprenant au moins un brûleur, au moins un circuit primaire doté d'au moins un échangeur primaire, au moins un circuit secondaire doté d'au moins un échangeur secondaire,
**caractérisé en ce que**
ledit filtre à mailles (2) comprend un corps muni de :
- une première partie (21) de forme cylindrique sensiblement creuse, capable de :
- étant logé dans une bifurcation ou dans une connexion dudit générateur de chaleur, et
- servant de support à une seconde partie (22) ; et
- ladite seconde partie (22) faisant saillie de ladite première partie (21) et équipée d'une pluralité d'ouvertures (220) pour le passage du fluide caloporteur, ladite seconde partie (22) définissant la section de filtration dudit filtre à mailles (2),
**et dans ce**
ladite deuxième partie (22) prévoit un développement longitudinal en pente/incliné qui se dégrade lorsqu'on s'éloigne de son extrémité faisant partie intégrante de ladite première partie (21), vers l'extrémité libre (221) de celle-ci.

10. Filtre à mailles (2) selon la revendication précédente, dans lequel l'extrémité libre (221) de ladite seconde partie (22) a un profil incurvé.

11. Mode de commande d'un générateur de chaleur (1) selon les revendications précédentes 1 à 8, ledit mode de commande étant capable d'effectuer/commander une commutation volontaire vers le mode CH dudit générateur de chaleur (1), ledit mode de commande permettant de :
- suivre/mémoriser des commutations de ladite vanne de dérivation (40) ;
- déterminer dans quel mode et pendant combien de temps ledit générateur de chaleur (1) fonctionne ;
- mettre en œuvre la transition volontaire vers le mode CH si ledit générateur de chaleur (1) fonctionne en mode DHW pendant une période plus longue qu'une période de référence prédéfinie.

12. Mode de commande selon la revendication précédente, dans lequel ledit mode de commande est effectué de manière autonome par le générateur de chaleur (1) à intervalles réguliers définis par le fabricant et/ou l'installateur et/ou l'utilisateur ou sur demande.

13. Mode de commande selon la revendication précédente 11 ou 12, dans lequel ladite période de référence peut être définie par le fabricant et/ou l'installateur et/ou l'utilisateur.
